# EUROPÄISCHE PATENTSCHRIFT

(11) **EP 0 432 672 B1**
(45) Veröffentlichungstag und Bekanntmachung des Hinweises auf die Patenterteilung: **19.03.1997**
(21) Anmeldenummer: 90123625.7
(22) Anmeldetag: 08.12.1990
(51) Int. Cl.: C08J 9/08, C08J 9/14

(54) **Verfahren zur Herstellung von Schaumstoffen mit Hilfe von Fluoralkanen**
Process for the preparation of foams with fluoralkanes
Procédé pour la préparation de mousses avec des fluoralcanes

(30) Priorität: 12.12.1989 DE 3940977; 14.03.1990 DE 4008042
(43) Veröffentlichungstag der Anmeldung: 19.06.1991
(73) Patentinhaber: SOLVAY (Société Anonyme), B-1050 Bruxelles (BE)
(72) Erfinder: Behme, Klaus-Jürgen, W-6239 Eppstein/Taunus (DE); Deger, Hans-Matthias, Dr., W-6238 Hofheim am Taunus (DE)
(74) Vertreter: Jacques, Philippe

(56) Entgegenhaltungen:
- EP-A- 0 344 537
- EP-A- 0 381 986

## Beschreibung

Die Erfindung betrifft ein Verfahren zur Herstellung von Schaumstoffen auf Basis von Polyisocyanaten, insbesondere von Polyurethan- und Polyisocyanuratschaumstoffen. Die Herstellung solcher Schaumstoffe ist bekannt und beispielsweise im Kunststoff-Handbuch, Band VII, Polyurethane, Carl Hanser Verlag München, Wien (1983), Seiten 246 bis 331, sowie in EP-A1-0 077 964, EP-A1-0 334 059, DE-AS 1 694 138 (= GB-PS 1 209 243) beschrieben.

In Ullmanns Enzyklopädie der technischen Chemie (1980), Band 19, Seiten 301 bis 341, sind die verwendbaren Rohstoffe und die möglichen Verfahren zur Herstellung von Polyurethanhartschaumstoffen zusammenfassend beschrieben.

Des weiteren sind entsprechende Hinweise in Kirk-Othmer, Encycl. of Chem. Technology, 3rd edition, Vol. 11 (1980), Pages 87-89 und Vol. 23 (1983), Pages 576-607 zu finden.

Übliche Treibmittel für Polyurethane sind Kohlendioxid - das bei der Herstellung der Polyurethane aus Polyisocyanaten und Verbindungen mit reaktivem Wasserstoff durch Zusatz von Wasser erzeugt wird - und/oder sogenannte "physikalische Treibmittel", nämlich leicht flüchtige organische Substanzen, wie Aceton, Ethylacetat, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether. Die Verwendbarkeit fluorierter Kohlenwasserstoffe zur Herstellung von wärmeisolierenden Polyurethanschaumstoffen ist z.B. aus der DE-PS 1 111 381 bekannt. Auch anorganische Treibmittel, z.B. Luft, CO₂ oder N₂O, kommen infrage. Weitere Einzelheiten über die Verwendung von Treibmitteln sind im Kunststoff-Handbuch, Band VII, Carl-Hanser-Verlag, München (1966), z.B. auf den Seiten 108 und 109, 453 bis 455 und 507 bis 510 beschrieben.

An physikalische Treibmittel für Polyurethanschaumstoffe werden bestimmte Anforderungen gestellt. Es ist eine gute Vermischbarkeit der Treibmittel mit den üblichen Rohstoffen erforderlich, so sollen aber im entstehenden Polyurethan unlöslich sein, um eine gute Materialqualität der Schaumstoffe zu gewährleisten. Des weiteren wird wegen der bei der Verschäumung auftretenden Reaktionswärme, die zu einer Temperaturerhöhung bis etwa 200 °C bei der Aufschäumung großvolumiger Teile führen kann, eine gute thermische Stabilität des Treibmittels erwartet. Außerdem sollten die Treibmittel vorzugsweise unbrennbar sein. Alle diese Anforderungen führten im Lauf der Entwicklung der Polyurethanschaum-Technologie dazu, fluorierte Chlorkohlenwasserstoffe (FCKW), insbesondere Trichlorfluormethan (FCKW 11), als physikalische Treibmittel zu verwenden.

Die FCKW stehen jedoch inzwischen im Verdacht, die Ozonhülle der Erde zu schädigen. Es ist deshalb notwendig, auf die Verwendung dieser Verbindungen baldmöglichst zu verzichten und stattdessen andere Substanzen, die kein Ozon-Schädigungspotential haben, als physikalische Treibmittel zu verwenden.

Diskutiert wird der Verzicht auf FCKW als Treibmittel zugunsten von CO₂, das - wie oben erwähnt - durch Zusatz von Wasser bei der Herstellung der Polyurethane aus Polyisocyanaten entsteht. Diese Methode ist zwar für manche Schaumstoffe vertretbar, führt aber insbesondere bei Hartschaumstoffen zu großen Nachteilen, weil die so hergestellten Schaumstoffe eine erhöhte Wärmeleitfähigkeit und damit ein geringeres Wärmedämmvermögen aufweisen als die mit Hilfe von FCKW hergestellten Schaumstoffe.

Überraschenderweise wurde nun gefunden, daß Fluoralkane in gleicher Weise wie FCKW zur Aufschäumung von Schaumstoffen auf Basis von Polyisocyanaten geeignet sind und die Wärmeleitfähigkeit der mit ihnen geschäumten Hartschaumstoffe wesentlich niedriger ist als die Wärmeleitfähigkeit der mit CO₂ geschäumten. Insbesondere wurde gefunden, daß man diese Fluoralkane und CO₂ gleichzeitig als Treibmittel benutzen kann, wobei schon bei relativ geringem Anteil an Fluoralkan (und entsprechend hohem CO₂-Anteil und daher hohem Wasseranteil in der Hartschaum-Rezeptur) eine erhebliche Verbesserung der Wärmedämmwirkung erreicht wird. Aus EP-A-0 344 537 ist die Verwendung von 1,1,1,4,4,4-Hexafluorbutan als Treibmittel bekannt. Die damit hergestellten Schaumstoffe haben jedoch eine relativ hohe Wärmeleitfähigkeit.

EP-A-0 381 986 beschreibt die Verwendung von Polyfluoroalkanen als Treibgase. Dieses Dokument fällt unter Art.54(3)EPÜ. Gegenstand der Erfindung ist ein Verfahren zur Herstellung von Schaumstoffen auf Basis von Polyisocyanaten durch Umsetzung von Polyisocyanaten, Verbindungen mit mindestens zwei gegenüber Isocyanatgruppen reaktionsfähigen Wasserstoffatomen, Treibmitteln und gegebenenfalls weiteren Zusatzmitteln, dadurch gekennzeichnet, daß man ein Treibmittel verwendet, das zu mindestens 10 Mol-% aus einem oder mehreren Fluoralkanen der allgeneinen Formel I

CₐH_{b}F_{c}

mit a = 6, b = 1-12 und c = 2-13 besteht.

Vorzugsweise bestehen mindestens 20 Mol-%, insbesondere 50-80 Mol-% des Treibmittels aus einem ader mehreren der genannten Fluoralkane. Das Treibmittel kann jedoch im Prinzip auch zu 100 Mol-% aus diesen Fluoralkanen bestehen.

Wenn jedoch - was im allgemeinen der Fall sein wird - nicht das gesamte Treibmittel aus diesen Fluoralkanen besteht, dann besteht der Rest aus einem der obengenannten konventionellen Treibgase, wobei man im allgemeinen jedoch aus den oben genannten Gründen auf FCKW weitgehend oder ganz verzichten wird. Vorzugsweise besteht der Rest dann zumindest teilweise aus CO₂, welches durch Zusatz einer geeigneten Menge an Wasser bei der Umsetzung der Polyisocyanate zu den Schaumstoffen erzeugt wird. Eine "geeignete" Menge Wasser ist dabei eine Menge, die den gewünschten Anteil an CO₂ erzeugt. Besonders bevorzugt ist ein Treibgas, das nur aus einem oder mehreren der genannten Fluoralkane und (durch Wasserzugabe erzeugtem) CO₂ besteht, d.h. daß der oben angesprochene "Rest" des Treibgases nur aus CO₂ besteht.

Unter den Fluoralkanen der Formel I sind diejenigen bevorzugt, für die a = 6, b = 1-8 und c = 3-13 ist. Besonders bevorzugt sind diejenigen, für die a = 6, b = 1-5 und c = 5-13 ist.

Die Herstellung der Fluoralkane wird beschrieben in Ullmann's Encyclopedia of Industrial Chemistry ,Volume A 11 (1988), Seite 349-389, insbesondere Seite 354-355; A. M. Lovelace et al., Aliphatic Fluorine Compounds (1958); H. Liebig und K. Ulm, Herstellung und Anwendung aliphatischer Fluorverbindungen II., Chemiker-Zeitung (1976), S. 3-13.

Ein weiterer Gegenstand der Erfindung sind Schaumstoffe auf Basis von Polyisocyanaten, die nach dem obigen Verfahren erhältlich sind.

Bei Verwendung der genannten Fluoralkane kann man die bisher üblichen Schaumrohstoffe einsetzen und, wie oben gesagt, die Anteile an Wasser oder konventionellem physikalischem Treibmittel weitgehend reduzieren oder sogar ganz auf sie verzichten.

Geeignete Polyisocyanate für das erfindungsgemäße Verfahren sind die für diesen Zweck üblichen aliphatischen, cycloaliphatischen und aromatischen Di- oder Polyisocyanate. Bevorzugt sind 2,4- und 2,6-Toluyldiisocyanat, Diphenylmethandiisocyanat, Polymethylenpolyphenylisocyanat und Mischungen davon. Es können auch Carbodiimidgruppen, Urethangruppen, Allophanatgruppen, Isocyanuratgruppen, Harnstoffgruppen oder Biuretgruppen enthaltende Polyisocyanate, die man als "modifizierte Polyisocyanate" und "Isocyanat-Präpolymere" bezeichnet, verwendet werden.

Die Polyisocyanate werden mit Verbindungen umgesetzt, die mindestens zwei gegenüber Isocyanatgruppen reaktionsfähige Wasserstoffatome enthalten, beispielsweise Hydroxylgruppen aufweisende Verbindungen auf Polyether-, Polyester- und Aminbasis, sowie Amino- und/oder Carboxyl- und/oder Thiolgruppen aufweisende Verbindungen. Diese Verbindungen haben in der Regel 2-8 gegenüber Isocyanaten reaktionsfähige Wasserstoffatome.

Als Katalysatoren bei dieser Umsetzung werden, wie üblich, tertiäre Amine, die ggf. auch gegenüber Isocyanatgruppen aktive Wasserstoffatome enthalten können und/oder organische Metallverbindungen, vorzugsweise Zinnsalze von Carbonsäuren eingesetzt.

Außerdem mitverwendet werden im allgemeinen oberflächenaktive Zusatzstoffe, wie Emulgatoren und Schaumstabilisatoren. Bei den Emulgatoren handelt es sich z.B. um Salze von Fettsäuren. Als Schaumstabilisatoren kommen oft Polyethersiloxane zum Einsatz.

Die nachfolgenden Beispiele 1-7 erläutern die Erfindung. Sie betreffen typische Hartschaum-Rezepturen mit unterschiedlichen Anteilen verschiedener Fluoralkane. Im Vergleichsbeispiel wird dagegen ausschließlich aus Wasser entstandenes CO₂ als Treibmittel verwendet. Es zeigt sich bei Mitverwendung der erfindungsgemäßen Fluoralkane neben CO₂ schon bei relativ geringen Fluoralkan-Anteilen von z.B. 25 Mol-%, bezogen auf die gesamte Treibmittel-Menge, eine deutliche Verringerung der Wärmeleitfähigkeit der Schaumstoffe. Dieser Effekt nimmt mit längerer Lagerzeit sogar noch zu.

Die Fluoralkane eignen sich auch zur Aufschäumung von weichen Schaumstoffen mit offenzelliger Struktur und zur Herstellung von Schaumstoff-Formteilen mit zelligem Kern und kompakter Oberfläche gemäß DE-AS 1 694 138 (entsprechend GB-PS 1209 243).

Die Eigenschaften der in den folgenden Beispielen hergestellten Schaumstoffe sind in der ihnen folgenden Tabelle angegeben.

### Vergleichsbeispiel 1

### (Verwendung von CO₂ als alleiniges Treibmittel)

85 g Sucrose/Propylenoxid-Polyether der OH-Zahl 380, 15 g Ethylendiamin/Propylenoxid-Polyether der OH-Zahl 480, 1 g Schaumstabilisator (Typ DC 193 von Dow Corning Corp.), 1,5 g Dimethylcyclohexylamin und 3,8 g Wasser wurden mittels eines Rührers mit 2500 Umdrehungen 15 Sekunden lang innig vermischt, dann mit 192 g rohem Diphenylmethandiisocyanat (MDI handelsüblicher Qualität) 10 Sekunden innig vermischt und anschließend in eine Papierform gegossen. Die Aufschäumung des Gemisches begann nach ca. 15 Sekunden und war nach ca. 75 Sekunden beendet. Es resultierte ein harter Schaumstoff mit den in der Tabelle angegebenen Eigenschaften.

### Vergleichsbeispiel 2

Es wurde verfahren wie im Vergleichsbeispiel 1, jedoch mit dem Unterschied, daß 2,0 g Dimethylcyclohexylamin, 2,0 g Wasser, 22 g 1,1-2,2-3,3-4,4-Octafluorbutan (HCF₂-CF₂-CF₂-CF₂H) und 165 g MDI verwendet wurden.

### Vergleichsbeispiel 3

Es wurde verfahren wie in Vergleichsbeispiel 2, aber der Wasser-Anteil auf 3,0 g und der MDI-Anteil auf 180 g erhöht und der Anteil von Octafluorbutan auf 11 g vermindert.

### Beispiel 1

Es wurde verfahren wie in Vergleichsbeispiel 3, aber die 11 g Octafluorbutan durch 15 g 1,1,1-2,2-3,3-4,4-Nonafluorhexan (CF₃-CF₂-CF₂-CF₂-CH₂-CH₃) ersetzt.

### Vergleichsbeispiel 4

15 g Glycerin/Ethylenoxid-Polyether der OH-Zahl 750, 50 g Sucrose/Propylenoxid-Polyether der OH-Zahl 490, 15 g Ethylendiamin/Propylenoxid-Polyether der OH-Zahl 480, 20 g Tetrabromphthalat-Diol der OH-Zahl 220 (PHT-4-Diol von Great Lakes Chemical), 20 g Trichlorethylphosphat, 1 g Schaumstabilisator, 1,5 g Dimethylcyclohexylamin, 1 g Wasser, 40 g 1,1-2,2-3,3-4,4-Octafluorbutan und 147 g MDI wurden wie im Vergleichsbeispiel 1 verschäumt.

### Beispiel 2

15 g eines Polyethers aus Ethylendiamin und gleichen Anteilen von Ethylenoxid und Propylenoxid der OH-Zahl 630 wurden mit 45 g Sorbitol/Glycerin/Propylenoxid-Polyether der OH-Zahl 560, 20 g Glycerin/Propylenoxid-Polyether der OH-Zahl 160, 20 g Tetrabromphthalat-Diol der OH-Zahl 220, 20 g Trichlorethylphosphat sowie 1,0 g Schaumstabilisator, 1,0 g Dimethylcyclohexylamin, 2,2 g Wasser, 22 g 1,1,1-2,2-3,3-4,4-Nonafluorhexan und 137 g MDI wie im Vergleichsbeispiel 1 vermischt und verschäumt.

### Beispiel 3

45 g Sorbitol/Glycerin/Propylenoxid-Polyether der OH-Zahl 560 wurden mit 15 g Ethylendiamin/Propylenoxid-Polyether der OH-Zahl 480, 20 g Glycerin/Propylenoxid-Polyether der OH-Zahl 160, 20 g Tetrabromphthalat-Diol der OH-Zahl 220, 20 g Trichlorethylphosphat, sowie je 1,0 g der mit den Handelsbezeichnungen DC 190 und DC 198 von der Fa. Dow-Corning-Corp. vertriebenen Schaumstabilisatoren, 1,0 g Dimethylcyclohexylamin, 2,2 g Wasser, 28 g 1,1-2,2-3,3-4,4-5,5-6,6,6-Fluorhexan und 137 g MDI wurden wie in den vorgenannten Beispielen vermischt und aufgeschäumt.

**Tabelle:**

| | Mol-Verhältnis Wasser/Fluoralkan | Eigenschaften des Schaumstoffs | | |
|---|---|---|---|---|
| | | Rohdichte (kg/m³) | Wärmeleitfähigkeit (23°C, mW/(m·K)) | |
| | | | nach 1 Tag | nach 6 Wochen |
| Vergleichsbeispiel 1 | 100/0 | 37 | 25,8 | 34,7 |
| Vergleichsbeispiel 2 | 49/51 | 37 | 22,5 | 25,0 |
| Vergleichsbeispiel 3 | 75/25 | 35 | 23,5 | 26,7 |
| Beispiel 1 | 75/25 | 38 | 23,5 | 26,0 |
| Vergleichsbeispiel 4 | 21/79 | 32 | 21,8 | 22,8 |
| Beispiel 2 | 50/50 | 32 | 20,9 | 22,2 |
| Beispiel 3 | 50/50 | 36 | 20,5 | 22,3 |

## Patentansprüche

1. Verfahren zur Herstellung von Schaumstoffen auf Basis von Polyisocyanaten durch Umsetzung von Polyisocyanaten, Verbindungen mit mindestens zwei gegenüber Isocyanatgruppen reaktionsfähigen Wasserstoffatomen, Treibmitteln und gegebenenfalls weiteren Zusatzmitteln, dadurch gekennzeichnet, daß man ein Treibmittel verwendet, das zu mindestens 10 Mol-% aus einem oder mehreren Fluoralkanen der allgemeinen Formel I
CₐH_{b}F_{c}
mit a = 6, b = 1-12 und c = 2-13 besteht.

2. Verfahren nach Anspruch 1, dadurch gekennzeichnet, daß man ein Treibmittel verwendet, das zu mindestens 20 Mol-% aus einem oder mehreren der genannten Fluoralkane besteht.

3. Verfahren nach Anspruch 1, dadurch gekennzeichnet, daß man ein Treibmittel verwendet, das zu 50-80 Mol-% aus einem oder mehreren der genannten Fluoralkane besteht.

4. Verfahren nach einem der Ansprüche 1 bis 3, dadurch gekennzeichnet, daß der Rest des Treibmittel zumindest teilweise aus CO₂ besteht, welches durch Zusatz von Wasser bei der Umsetzung der Polyisocyanate gebildet wird.

5. Verfahren nach einem der Ansprüche 1 bis 3, dadurch gekennzeichnet, daß der Rest des Treibmittels aus CO₂ besteht, welches durch Zusatz von Wasser bei der Umsetzung der Polyisocyanate gebildet wird.

6. Verfahren nach einem der Ansprüche 1 bis 5, dadurch gekennzeichnet, daß man einen oder mehrere Fluoralkane der Formel I mit a = 6, b = 1-8 und c = 2-13 einsetzt.

7. Verfahren nach einem der Ansprüche 1 bis 5, dadurch gekennzeichnet, daß man einen oder mehrere Fluoralkane der Formel I mit a = 6, b = 1-5 und c = 5-13 einsetzt.

## Claims

1. A process for producing foams based on polyisocyanates by reacting polyisocyanates, compounds having at least two hydrogen atoms reactive towards isocyanate groups, blowing agents and, if appropriate, further additives, characterized in that a blowing agent is used which is composed to the extent of at least 10 mol % of one or more fluoroalkanes of the formula I
CₐH_{b}F_{c}
where a = 6, b = 1-12 and c = 2-13.

2. The process as claimed in claim 1, characterized in that a blowing agent is used which is composed to the extent of at least 20 mol % of one or more of the said fluoroalkanes.

3. The process as claimed in claim 1, characterized in that a blowing agent is used which is composed to the extent of 50-80 mol % of one or more of the said fluoroalkanes.

4. The process as claimed in any of claims 1 to 3, characterized in that the remainder of the blowing agent is composed at least partially of CO₂ which is formed by addition of water during the reaction of the polyisocyanates.

5. The process as claimed in any of claims 1 to 3, characterized in that the remainder of the blowing agent is composed of CO₂ which is formed by addition of water during the reaction of the polyisocyanates.

6. The process as claimed in any of claims 1 to 5, characterized in that one or more fluoroalkanes of the formula I where a = 6, b = 1-8 and c = 2-13 are used.

7. The process as claimed in any of claims 1 to 5, characterized in that one or more fluoroalkanes of the formula I where a = 6, b = 1-5 and c = 5-13 are used.

## Revendications

1. Procédé de fabrication de mousses à base de polyisocyanates par réaction de polyisocyanates, de composés comportant au moins deux atomes d'hydrogène réactifs avec des groupes isocyanates, d'agents gonflants et éventuellement d'autres additifs, caractérisé en ce qu'on met en oeuvre un agent gonflant qui est constitué pour au moins 10 % molaire d'un ou de plusieurs fluoroalcanes conformes à la formule I
CₐH_{b}F_{c}
avec a = 6, b = 1-12 et c = 2-13.

2. Procédé selon la revendication 1, caractérisé en ce qu'on met en oeuvre un agent gonflant qui est constitué pour au moins 20 % molaire d'un ou de plusieurs desdits fluoroalcanes.

3. Procédé selon la revendication 1, caractérisé en ce qu'on met en oeuvre un agent gonflant qui est constitué pour 50-80 % molaire d'un ou de plusieurs desdits fluoroalcanes.

4. Procédé selon une quelconque des revendications 1 à 3, caractérisé en ce que le reste de l'agent gonflant est constitué au moins partiellement de CO₂, lequel est formé par addition d'eau lors de la réaction des polyisocyanates.

5. Procédé selon une quelconque des revendications 1 à 3, caractérisé en ce que le reste de l'agent gonflant est constitué de CO₂, lequel est formé par addition d'eau lors de la réaction des polyisocyanates.

6. Procédé selon une quelconque des revendications 1 à 5, caractérisé en ce qu'on met en oeuvre un ou plusieurs fluoroalcanes conformes à la formule I avec a = 6, b = 1-8 et c = 2-13.

7. Procédé selon une quelconque des revendications 1 à 5, caractérisé en ce qu'on met en oeuvre un ou plusieurs fluoroalcanes conformes à la formule I avec a = 6, b = 1-5 etc=5-13.
